# NEW EUROPEAN PATENT SPECIFICATION

(11) **EP 4 053 424 B2**
(45) Date of publication and mention of the opposition decision: **05.08.2026**
(45) Mention of the grant of the patent: 08.11.2023
(21) Application number: 22159160.5
(22) Date of filing: 28.02.2022
(51) Int. Cl.: F16C 33/58, F16C 43/04, F16C 19/54, F16C 33/46, F16C 35/063, F16C 35/067

(54) **GEAR DEVICE AND METHOD OF MANUFACTURING THE SAME**
GETRIEBEVORRICHTUNG UND VERFAHREN ZUR HERSTELLUNG DAVON
DISPOSITIF D'ENGRENAGE ET SON PROCÉDÉ DE FABRICATION

(30) Priority: 04.03.2021 JP 2021034378
(43) Date of publication of application: 07.09.2022
(73) Proprietor: Nabtesco Corporation, Tokyo 102-0093 (JP)
(72) Inventor: Momoi, Naoki, Tokyo, 102-0093 (JP)
(74) Representative: Grünecker Patent- und Rechtsanwälte PartG mbB

(56) References cited:
- EP-A1- 3 332 136
- EP-A1- 3 494 318
- DE-A1- 102018 212 093
- DE-A1- 102019 115 289
- DE-A1- 102020 206 457
- US-B2- 9 284 984

## Description

### TECHNICAL FIELD

The present invention relates to a gear device and manufacturing method thereof.

### BACKGROUND

Gear devices typically have bearings with which a shaft is rotatably provided in a case. As the bearings, tapered roller bearings, which are suitable for applications where heavy loads or impact loads are applied, may be adopted. A tapered roller bearing includes an inner race, an outer race, and a plurality of cylindrical rollers disposed between the inner race and the outer race. The cylindrical rollers are formed in a cylindrical shape and its axis is inclined to the axis of the shaft. One type of the tapered roller bearings is equipped with a flange at a large diameter end on the outer peripheral surface of the inner race (see, for example, Patent Literature 1). The flange restricts the movement of the cylindrical rollers in the axial direction. Furthermore, DE 10 2020 206457 discloses a gear device related to claim 1.

### RELEVANT REFERENCES

### LIST OF RELEVANT PATENT LITERATURE

Patent Literature 1: Japanese Patent Application Publication No. 2021-4659

### SUMMARY

In a method of assembling the above conventional gear device, the outer ring (outer race) of the tapered roller bearing is first mounted on the case. Subsequently, the plurality of cylindrical rollers and a retainer are mounted on a raceway surface of the outer ring, which is the inner peripheral surface of the outer ring. A seal is then attached on the case. Subsequently, a base portion of a carrier with the inner ring (inner race) attached thereto is brought closer to the case along the axial direction, and an inner raceway surface on the outer circumference of the inner ring is mounted on the plurality of rollers and the retainer.

According to this assembly method, when the inner ring is mounted on the plurality of rollers and the cage, misalignment of the plurality of rollers and the cage attached on the outer ring could occur, which may result in problems such as biting between the cylindrical rollers and the cage due to inappropriate positioning of the outer ring and inner ring.

The present invention provides a gear device that can reduce chance of defects occurring during its manufacturing process.

A gear device according to aspect of the invention includes: a case; a shaft and an input shaft disposed in the case; a gear mechanism transmitting rotation of the input shaft to the case or the shaft; and a bearing disposed between the case and the shaft, the bearing supporting the shaft rotatably relative to the case. The bearing includes: an inner race provided on the shaft; an outer race provided on the case; a plurality of rolling elements arranged between the inner race and the outer race, each of the rolling elements rotating about an axis inclined with respect to an axis of the shaft; and a retainer retaining the plurality of rolling elements. The outer race has a flange portion that projects radially inward at a larger-diameter side end of its inner peripheral surface to prevent the plurality of rolling elements from moving in a direction of the axes of the rolling elements.

As described above, in the gear device provided with the gear mechanism for transmitting the rotation of the input shaft to either the case or the shaft, by configuring this way, it is possible to restrict the positions of the plurality of rolling elements by the flange portion of the outer race. Therefore, when the inner race is attached, it is possible to prevent the plurality of rolling elements from being displaced and the gear device can be easily assembled.

The gear device according to the invention further includes a seal portion that is disposed on outer side of the bearing in the axial direction of the shaft to seal between the case and the shaft.

In the above configuration, each of the rolling elements is a tapered roller having a truncated cone outer shape. Each of the plurality of rolling elements has two ends in the axial direction, and a larger diameter one of the two ends faces radially outward.

In the above configuration, each of the plurality of rolling elements may be a cylindrical roller having a cylindrical outer shape.

In the above configuration, the input shaft may be two or more crank shafts each of which has an eccentric axis radially displaced from the axis of the shaft. Each of the two or more crank shafts has an eccentric portion eccentric with respect to the eccentric axis. The gear mechanism may be an oscillating gear that is supported by the shaft and oscillatory rotates in conjunction with rotation of the eccentric portion.

In the above configuration, the input shaft may be disposed coaxially with the axis of the shaft and have an eccentric portion eccentric with respect to the axis of the shaft. The gear mechanism may be an oscillating gear that is supported by the shaft and oscillatory rotates in conjunction with rotation of the eccentric portion.

A gear device according to another aspect includes: a case; a shaft disposed in the case; two or more crank shafts disposed in the case and each of which has an eccentric axis radially displaced from the axis of the shaft. Each of the two or more crank shafts has an eccentric portion eccentric with respect to the eccentric axis; two or more oscillating gears supported by the shaft and oscillatory rotate in conjunction with rotation of corresponding ones of the eccentric portions to transmit rotation inputted to the crank shafts to the case or the shaft; and a bearing disposed between the case and the shaft, the bearing supporting the shaft rotatably relative to the case. The bearing includes: an inner race provided on the shaft; an outer race provided on the case; a plurality of rolling elements arranged between the inner race and the outer race, each of the rolling elements rotating about an axis inclined with respect to an axis of the shaft; and a retainer retaining the plurality of rolling elements. The outer race has a flange portion that projects radially inward at a larger-diameter side end of its inner peripheral surface to prevent the plurality of rolling elements from moving in a direction of the axes of the rolling elements.

The gear device according to another aspect includes the two or more crank shafts each provided with the eccentric portion, and the two or more oscillating gears that oscillatory rotate in conjunction with rotation of corresponding ones of the eccentric portions to transmit the rotation inputted to the crank shaft to either the case or the shaft. By configuring as described above, it is possible to restrict the positions of the plurality of rolling elements by the flange portion of the outer race. Therefore, when the inner race is attached, it is possible to prevent the plurality of rolling elements from being displaced and the gear device can be easily assembled.

A method of manufacturing a gear device according to yet another aspect includes: an outer race attachment step of attaching an outer race of a bearing to a case, the bearing supporting a shaft rotatably relative to the case; an inner race attachment step of attaching an inner race of the bearing to the shaft; and a first attachment step of attaching, to a flange portion formed on the outer race, a plurality of rolling elements that rotate about a central axis inclined with respect to an axis of the shaft, and a retainer that retains the plurality of rolling elements. The flange portion projects radially inward from an inner peripheral surface of the outer race and is disposed at a large-diameter end of the inner peripheral surface situated on a larger diameter side of the inner peripheral surface. The manufacturing method further includes a second attachment step of attaching, after the first attachment step, the plurality of rolling element to an outer peripheral surface of the inner race by moving one of the case or the shaft toward the other of the case or the shaft along the axis of the shaft.

According to this manufacturing method, the positions of the plurality of rolling elements are restricted by the flange portion of the outer race, and then the plurality of rolling elements are mounted by attaching the inner race. Thus, it is possible to prevent the misalignment of the plurality of rolling elements. Consequently, it is possible to prevent the occurrence of problems such as biting of the rolling elements by the outer race and the inner race.

### ADVANTAGEOUS EFFECTS

According to the aspects of the invention, it is possible to prevent the plurality of rolling elements from being displaced and the gear device can be easily assembled.

### BRIEF DESCRIPTION OF THE DRAWINGS

Fig. 1 is a sectional view of a part of a gear device according to an embodiment of the present invention.
Fig. 2 is a partially-enlarged sectional view of the gear device of Fig. 1.
Fig. 3 illustrates a manufacturing method of the gear device according to the embodiment of the invention.
Fig. 4 illustrates a manufacturing method of the gear device according to the embodiment of the invention.
Fig. 5 illustrates a manufacturing method of a gear device of a comparative example.

### DESCRIPTION OF THE EMBODIMENTS

A gear device and a manufacturing method thereof according to an embodiment of the invention will now be described with reference to the appended drawings.

### <Gear Device>

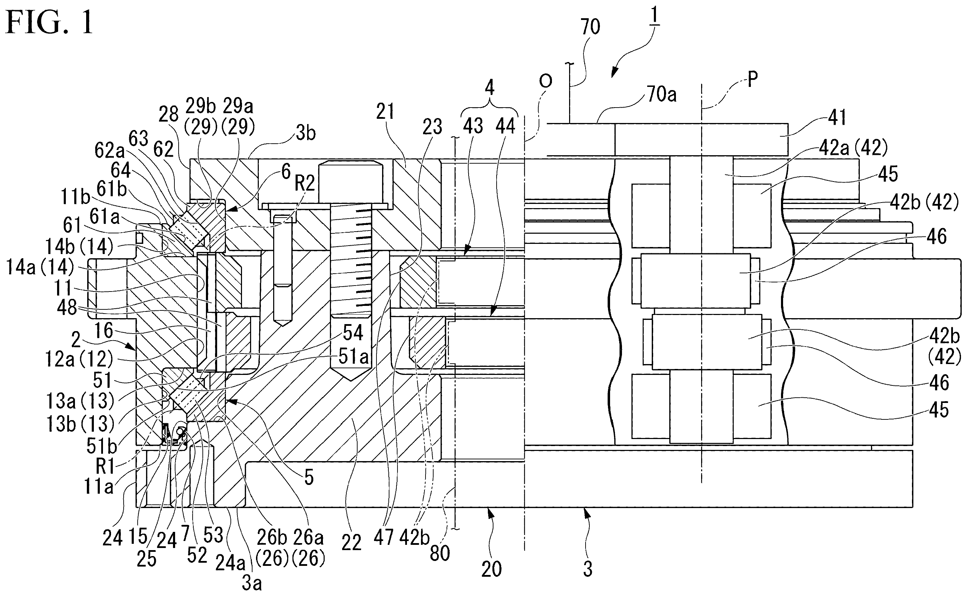

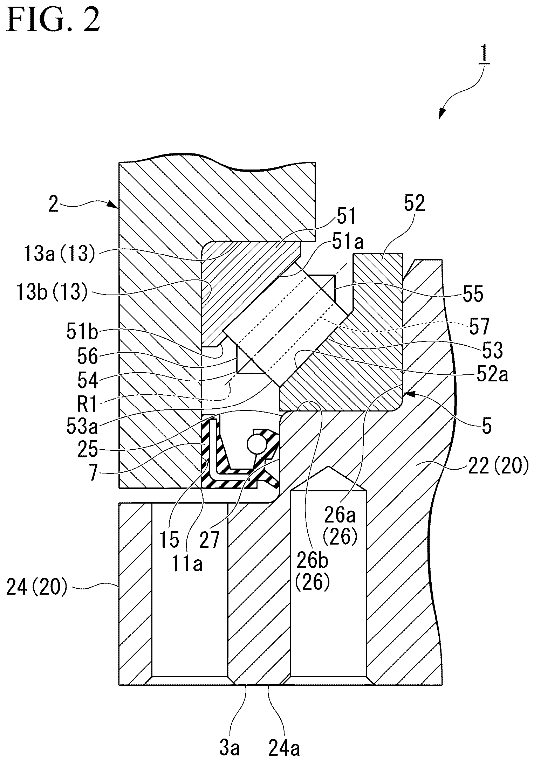

Fig. 1 is a sectional view of a part of a gear device 1 according to an embodiment of the invention. Fig. 2 is a partially enlarged sectional view of the gear device of Fig. 1. As shown in Figs. 1 and 2, the gear device 1 is an eccentric oscillating gear transmission device, for example. The gear device 1 includes a case 2, a carrier 3 (an example of a shaft in the claims) provided rotatably relative to the case 2, a speed reducing mechanism 4 that reduces a speed of rotation of an unshown drive source and transmits the speed-reduced rotation to the case 2 or the carrier 3, a first main bearing 5 (an example of the bearing in the claims) and second main bearing 6 an example of the bearing in the claims) that support the carrier 3 rotatably to the case 2, and a seal portion 7 that seals between the case 2 and the carrier 3.

The case 2 is fixed to a housing (not shown) that houses the drive source such as a motor. The outer shape of the case 2 is, for example, a cylindrical shape centered on the axis O. An inner peripheral surface 11 of the case 2 has an internal tooth portion 12 in which a plurality of pin grooves 12a are formed, and a first outer race holding portion 13 and second outer race holding portion 14 that hold outer races 51 and 61 of the main bearings 5 and 6 respectively, and a case-side seal portion 15. In the following description, a direction parallel to the axis O direction is referred to as an axial direction, a rotational direction of the carrier 3 is referred to as a circumferential direction, and a radial direction of the carrier 3 orthogonal to the axial direction and the circumferential direction is simply referred to as a radial direction.

The internal tooth portion 12 is formed between both ends in the axial direction (a first end 11a shown at the lower side of Fig. 1 and a second end 11b shown at the upper side of Fig. 1) on the inner peripheral surface 11 of the case 2. Each pin groove 12a of the plurality of pin grooves 12a extends in the axial direction. The plurality of pin grooves 12a are provided at equal intervals in the circumferential direction. Each pin groove 12a holds an internal tooth pin 16.

The first outer race holding portion 13 and the second outer race holding portion 14 are adjacent to two sides of the internal tooth portion 12 respectively in the axial direction. The first outer race holding portion 13 and the second outer race holding portion 14 are provided radially outward from the bottom portion of the pin grooves 12a of the internal tooth portion 12. For example, the second outer race holding portion 14 includes an end portion disposed on the second end 11b side on the inner peripheral surface 11 of the case 2.

The first outer race holding portion 13 includes an annular first stepped surface 13a extending radially outward from the end of the internal tooth portion 12 on the first end 11a side, and an annular first peripheral surface 13b extending axially outward from an outer peripheral side end of the first stepped surface 13a. The second outer race holding portion 14 includes an annular second stepped surface 14a extending radially outward from the end of the internal tooth portion 12 on the second end 11b side, and an annular second peripheral surface 14b extending axially outward from an outer peripheral side end of the second stepped surface 14a.

For example, the radial length of the first stepped surface 13a and the radial length of the second stepped surface 14a are the same. The inner diameter (diameter centered on the axis O) of the first peripheral surface 13b and the inner diameter (diameter centered on the axis O) of the second peripheral surface 14b are the same. The first outer race holding portion 13 holds the outer race 51 (see Fig. 2) of the first main bearing 5, which will be described later. The second outer race holding portion 14 holds the outer race 61 of the second main bearing 6, which will be described later.

The case-side seal portion 15 is provided closer to the first end 11a than the first outer race holding portion 13 and is adjacent to the first outer race holding portion 13 in the axial direction. The inner diameter (diameter centered on the axis O) of the case-side seal portion 15 is the same as the inner diameter (diameter centered on the axis O) of the first peripheral surface 13b of the first outer race holding portion 13. For example, the case-side seal portion 15 includes an end portion of the inner peripheral surface 11 of the case 2 on the first end 11a side. The case-side seal portion 15 holds the seal portion 7.

The carrier 3 is connected to a driven unit (not shown). The carrier 3 is placed inside the case 2. Both ends in the axial direction (first end 3a and second end 3b) of the carrier 3 project from the case 2 on both sides in the axial direction. The carrier 3 includes a first block 20 and a second block 21 arranged in the axial direction. In the following description, of the axial ends of the carrier 3, the end on the first block 20 side is referred to as the first end 3a, and the end on the second block 21 side is referred to as the second end 3b. The side on which the first end 3a of the carrier 3 is situated coincides the side on which the first end 11a of the case 2 is situated. The side on which the second end 3b of the carrier 3 is situated coincides the side on which the second end 11b of the case 2 is situated.

The first block 20 includes a base portion 22 supported by the case 2 via the first main bearing 5, and a plurality of support columns 23 and a flange portion 24 integrally molded with the base portion 22. The outer shape of the base portion 22 is, for example, a disk shape centered on the axis O. The plurality of support columns 23 project in the axial direction from the end surface of the base portion 22 on the second end 3b side. The plurality of support columns 23 are arranged at equal intervals in the circumferential direction on the end surface of the base portion 22 on the second end 3b side. The plurality of support columns 23 are received in through holes 47 with play formed in a first oscillating gear 43 (an example of the oscillating gear in the claim) and a second oscillating gear 44, (an example of the oscillating gear in the claim), which will be described later, to support the first oscillating gear 43 and the second oscillating gear 44.

The outer shape of the flange portion 24 is, for example, a disk shape that is centered on the axis O and protrudes radially outward from the base portion 22. The flange portion 24 is provided at the end of the base portion 22 on the first end 3a side. The flange portion 24 overlaps the end portion of the case 2 on the first end 11a side when viewed from the axial direction. An end surface 24a of the flange portion 24 on the first end 3a side is a mounting surface on which the driven portion (not shown) is mounted.

The outer shape of the second block 21 is, for example, a disk shape centered on the axis O. The second block is fixed to the tips of the plurality of support columns 23 with fastening members (not shown). The carrier 3 rotates relative to the case 2 about the axis of the axis O with oscillating rotations of the first oscillating gear 43 and the second oscillating gear 44, which will be described later.

The outer peripheral surface 25 of the base portion 22 includes a first inner race holding portion 26 and a carrier-side seal portion 27 provided on the first end 3a side (outside in the axial direction) with reference to the first inner race holding portion 26. The first inner race holding portion 26 is provided at an end portion of the outer peripheral surface 25 of the base portion 22 on the second end 3b side. The first inner race holding portion 26 includes an annular first peripheral surface 26a extending (axially outward) from the end of the base portion 22 on the second end 3b side toward the first end 3a side, and an annular first stepped surface 26b extending radially outward from the axially outer end of the first peripheral surface 26a. At least a part of the first peripheral surface 26a of the first inner race holding portion 26 faces the first peripheral surface 13b of the first outer race holding portion 13 in the radial direction.

The carrier-side seal portion 27 is adjacent to the first inner race holding portion 26 in the axial direction. The carrier-side seal portion 27 is disposed at the first end 3a side end portion of the outer peripheral surface 25 of the base portion 22. The outer diameter (diameter centered on the axis O) of the carrier-side seal portion 27 is, for example, larger than the outer diameter (diameter centered on the axis O) of the first peripheral surface 26a of the first inner race holding portion 26. The carrier-side seal portion 27 faces the case-side seal portion 15 of the case 2 in the radial direction. The carrier-side seal portion 27 holds the seal portion 7.

The second block 21 is supported by the case 2 via the second main bearing 6. A second inner race holding portion 29 is formed on an outer peripheral surface 28 of the second block 21. More specifically, the second inner race holding portion 29 is formed at an end portion of the outer peripheral surface 28 of the second block 21 that is situated on the first end 3a side.

The second inner race holding portion 29 includes an annular second peripheral surface 29a extending (axially outward) from the end of the second block 21 on the first end 3a side toward the second end 3b side, and an annular second stepped surface 29b extending radially outward from the axially outer end of the second peripheral surface 29a. At least a part of the second peripheral surface 29a of the second inner race holding portion 29 faces the second peripheral surface 14b of the second outer race holding portion 14 in the radial direction.

The outer diameter (diameter centered on the axis O) of the first peripheral surface 26a and the outer diameter (diameter centered on the axis O) of the second peripheral surface 29a are the same. For example, the radial length of the first stepped surface 26b and the radial length of the second stepped surface 29b are the same. The first inner race holding portion 26 holds an inner race 52 (see Fig. 2) of the first main bearing 5, which will be described later. The second inner race holding portion 29 holds an inner race 62 of the second main bearing 6, which will be described later.

### <Speed Reducing Mechanism>

The speed reducing mechanism 4 is arranged, for example, coaxially with the axis O. The speed reducing mechanism 4 includes a drive shaft 70 connected to a drive source (not shown), a plurality of transmission gears 41 meshing with a drive gear 70a of the drive shaft 70, a plurality of crank shafts 42 connected the plurality of transmission gears 41, and the first oscillating gear 43 and second oscillating gear 44. Central axes P of the two or more transmission gears 41 and the plurality of crank shafts 42 are parallel to the axis O at equidistant positions in the circumferential direction around the axis O.

Each crank shaft 42 includes a shaft portion 42a supported by the carrier 3 and two eccentric portions 42b provided on the shaft portion 42a and eccentric with respect to the central axis P. The shaft portion 42a of each crank shaft 42 is inserted into a through hole (not shown) formed in the carrier 3 (the first block 20 and second block 21) via a pair of bearings 45. The two eccentric portions 42b of each crank shaft 42 are inserted into through holes (not shown) formed in the first oscillating gear 43 and the second oscillating gear 44 via the corresponding bearing 46. The first oscillating gear 43 and the second oscillating gear 44 oscillatory rotate in conjunction with relative rotation of the two eccentric portions 42b of each crank shaft 42, which rotates the case 2 and the carrier 3 relatively to each other.

The outer shapes of the first oscillating gear 43 and the second oscillating gear 44 are, for example, disk shapes having an outer diameter smaller than the inner diameter of the inner tooth portion 12 of the case 2. Each of the first oscillating gear 43 and the second oscillating gear 44 is formed with the same number of through holes 47 as the plurality of support columns 23. Each support column 23 is received in the corresponding through hole 47. The inner diameter of each through hole 47 is larger than the outer diameter of each support column 23 so that each support column 23 does not interfere with the oscillating rotation of the first oscillating gear 43 and the second oscillating gear 44.

Outer peripheral surface of each of the first oscillating gear 43 and the second oscillating gear 44 includes external teeth 48 that mesh with the plurality of internal tooth pins 16 of the internal tooth portion 12 of the case 2. The number of the internal tooth pins 16 and the number of the external teeth 48 are different. The first oscillating gear 43 and the second oscillating gear 44 move eccentrically in conjunction with the eccentric portion 42b by the rotation of each crank shaft 42 that receives the rotational driving force of the input shaft. In this way, the first oscillating gear 43 and the second oscillating gear 44 oscillatory rotate while engaging the outer teeth 48 with some of the plurality of internal tooth pins 19 of the case 2.

Here, when the case 2 is fixed to a fixed member (not shown), the first oscillating gear 43 and the second oscillating gear 44 rotate around the axis O relative to the case 2 together with the carrier 3. Whereas when the carrier 3 is fixed to the fixed member (not shown), the first oscillating gear 43 and the second oscillating gear 44 rotate around the axis O relative to the carrier 3 together with the case 2.

### <Main Bearing>

The first main bearing 5 and the second main bearing 6 are, for example, tapered roller bearings. The first main bearing 5 is disposed between the case 2 and the base portion 22 of the first block 20 of the carrier 3. The first main bearing 5 includes the outer race 51 (outer ring), the inner race 52 (inner ring) disposed radially inside the outer race 51, a plurality of rollers (rolling elements or rollers) 53 arranged between the outer race 51 and the inner race 52, and a retainer 54.

The outer race 51 has an annular outer shape centered on the axis O. The outer race 51 contacts the first stepped surface 13a of the first outer race holding portion 13 of the case 2 from the outside in the axial direction (from the first end 11a side), and the outer race 51 is fitted on the first peripheral surface 13b of the first outer race holding portion 13. The outer race 51 includes an outer ring raceway surface 51a (an example of the inner peripheral surface in the claims), which is an inner peripheral surface inclined with respect to the axis O. The outer ring raceway surface 51a faces the inner side in the radial direction and the outer side in the axial direction (the first end 11a side).

The outer race 51 has a flange portion 51b that projects inward in the radial direction at the large-diameter end (the end on the first end 11a side that is the outer side in the axial direction) of the outer ring raceway surface 51a. The flange portion 51b supports the rollers 53 by contacting the end surface of each roller 53. More specifically, the flange portion 51b prevents the rollers 53 from moving in the central axis R1 direction (an example of the axis of the rolling element in the claim) and holds each roller 53 at a predetermined position on the outer ring raceway surface 51a.

The outer shape of the inner race 52 is an annular shape coaxial with the outer race 51. The inner race 52 comes into contact with the first stepped surface 26b of the first inner race holding portion 26 of the base portion 22 of the first block 20 from the inner side in the axial direction (from the second end 3b side), and the inner race 52 is fitted on the first peripheral surface 26a of the first inner race holding portion 26. The inner race 52 includes an inner ring raceway surface 52a which is an outer peripheral surface inclined with respect to the axial direction. The inner ring raceway surface 52a faces the radial outer side and the axial inner side (second end 3b side) so as to face the outer ring raceway surface 51a of the outer race 51.

Each roller 53 is a tapered roller having a truncated cone outer shape. The central axis R1 of each roller 53 is tilted at a predetermined angle with respect to the axial direction. The rollers 53 are arranged between the outer race 51 and the inner race 52. Further, the rollers 53 are arranged at equal intervals in the circumferential direction so that the central axes R1 extend along the radial direction when viewed from the axial direction. The rollers 53 are arranged such that, of the ends in the central axis R1 direction, their large diameter (lower bottom) side ends 53a face outward in the radial direction. Each roller 53 orbits around the axis of the axis O while rolling on the outer ring raceway surface 51a of the outer race 51 and on the inner ring raceway surface 52a of the inner race 52.

The retainer 54 holds the plurality of rollers 53. The retainer 54 includes a first annular portion 55 and a second annular portion 56 extending in the circumferential direction, and a plurality of connecting portions 57 connecting the first annular portion 55 and the second annular portion 56.

The first annular portion 55 is provided at the inner end of the retainer 54 in the radial direction. The first annular portion 55 extends along the first end surfaces of the plurality of rollers 53. The second annular portion 56 is provided on the outer side in the axial direction and the outer side in the radial direction with respect to the first annular portion 55. The second annular portion 56 extends along the second end surfaces of the plurality of rollers 53. Each connecting portion 57 extends in the radial direction when viewed from the axial direction. The plurality of connecting portions 57 are arranged at predetermined intervals in the circumferential direction. Each connecting portion 57 extends between the outer ring raceway surface 51a of the outer race 51 and the inner ring raceway surface 52a of the inner race 52, and connects the first annular portion 55 and the second annular portion 56. The retainer 54 holds the rollers 53 in pockets surrounded by the first annular portion 55, the second annular portion 56, and the pair of adjacent connecting portions 57.

The second main bearing 6 is disposed between the case 2 and the second block 21 of the carrier 3. The second main bearing 6 includes the outer race 61 (outer ring), the inner race 62 (inner ring) disposed radially inside the outer race 61, a plurality of rollers (rolling elements or rollers) 63 arranged between the outer race 61 and the inner race 62, and a retainer 64. The second main bearing 6 may be configured substantially the same as the first main bearing 5, the description of the second main bearing 6 will be omitted or simplified below.

The outer race 61 has an annular outer shape centered on the axis O. The outer race 61 contacts the second stepped surface 14a of the second outer race holding portion 14 of the case 2 from the outside in the axial direction (from the second end 11b side), and the outer race 61 is fitted on the second peripheral surface 14b of the second outer race holding portion 14. The outer race 61 includes an outer ring raceway surface 61a (an example of the inner peripheral surface in the claims), which is an inner peripheral surface inclined with respect to the axis. The outer ring raceway surface 61a faces the inner side in the radial direction and the outer side in the axial direction (the second end 11b side). The outer race 61 has a flange portion 61b that projects inward in the radial direction at the large-diameter end (the end on the second end 11b side that is situated on the outer side in the axial direction) of the outer ring raceway surface 61a.

The outer shape of the inner race 62 is an annular shape coaxial with the outer race 61. The inner race 62 comes into contact with the second stepped surface 29b of the second inner race holding portion 29 of the second block 20 from the inner side in the axial direction (from the first end 3a side), and the inner race 62 is fitted on the second peripheral surface 29a of the second inner race holding portion 29. The inner race 62 includes an inner ring raceway surface 62a which is an outer peripheral surface inclined with respect to the axial direction. The inner ring raceway surface 62a faces the radial outer side and the axial inner side (first end 3a side) so as to face the outer ring raceway surface 61a of the outer race 61.

Each roller 63 is a tapered roller having a truncated cone outer shape. A central axis R2 of each roller 63 (an example of the axis of the rolling element in the claim) is tilted to the direction opposite to each roller 53 of the first main bearing 5 at a predetermined angle with respect to the axial direction. The rollers 63 are arranged between the outer race 61 and the inner race 62. The rollers 63 are arranged at equal intervals in the circumferential direction. Each roller 63 orbits around the axis of the axis O while rolling on the outer ring raceway surface 61a of the outer race 61 and on the inner ring raceway surface 62a of the inner race 62. The retainer 64 holds the plurality of rollers 63.

The seal portion 7 has, for example, an annular outer shape. The seal portion 7 is disposed on the outer side of the first main bearing 5 (on the first end 3a side) in the axial direction. The seal portion 7 is flanked by the case-side seal portion 15 and the carrier-side seal portion 27 in the radial direction. The seal portion 7 seals the annular space between the case 2 and the carrier 3. The seal portion 7 prevents, for example, foreign matter from entering the annular space from the outside and the liquid lubricant stored in the annular space from flowing out to the outside.

The configuration of the gear device 1 according to the embodiment of the present invention has been described. A method of assembling the gear device 1 will be now described as a method of manufacturing the gear device 1.

### <Assembling Method of Gear Device>

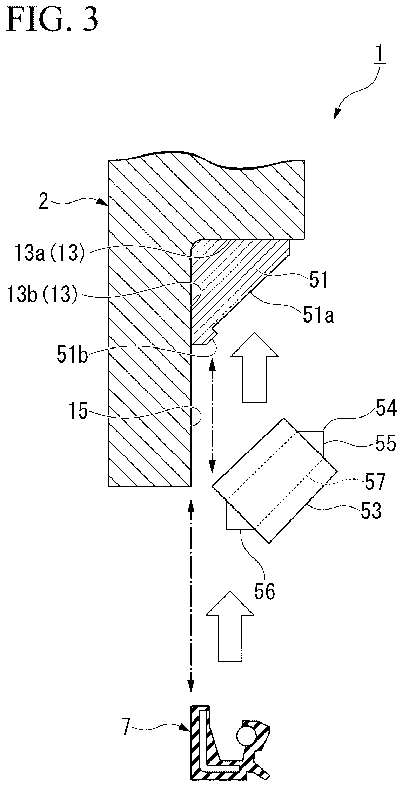

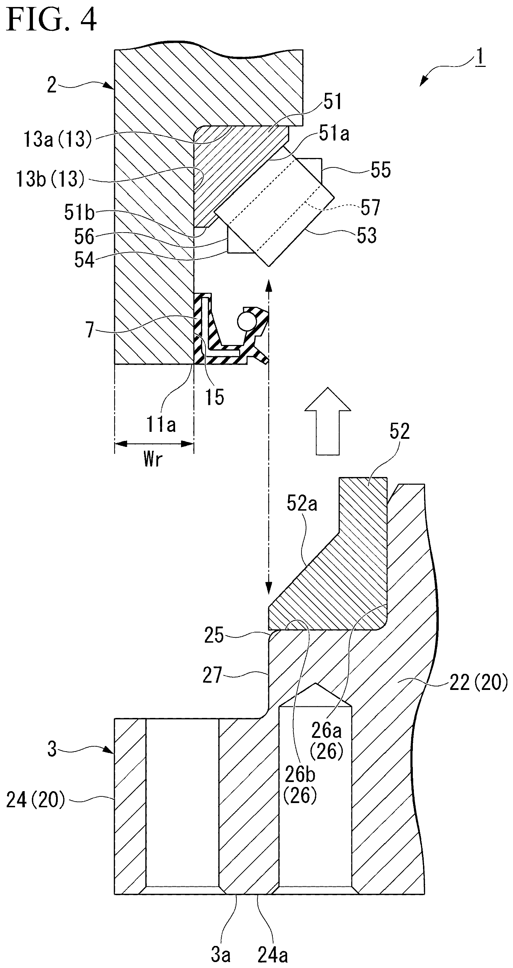

A method of assembling the gear device 1 will be described with reference to Figs. 3 and 4. Figs. 3 and 4 illustrate the assembling method of the gear device 1 according to the embodiment. In the method of assembling the gear device 1, how to assemble the first main bearing 5 is same as that of the second main bearing 6. Therefore, in the following description, the assembling method for the first main bearing 5 will be mainly described, and the assembling method for the second main bearing 6 will be described as necessary.

As shown in Figs. 3 and 4, when the carrier 3 is assembled to the case 2, the outer race 51 of the first main bearing 5, the plurality of rollers 53 and the cage 54, and the seal portion 7 are mounted on the case 2 in advance. As shown in Fig. 3, the outer race 51 is first attached to the first outer race holding portion 13 of the case 2 (an outer race attaching step).

Next, the retainer 54 for holding the plurality of rollers 53 is inserted in the case 2 from the outside in the axial direction toward the outer race 51, and the plurality of rollers 53 are brought into contact with the outer ring raceway surface 51a and are retained by the flange portion 51b (first attachment step). In this way, the plurality of rollers 53 are restrained at predetermined positions on the outer ring raceway surface 51a. Subsequently, the seal portion 7 is inserted from the outside in the axial direction into the case 2, and the seal portion 7 is attached to the case-side seal portion 15.

As shown in Fig. 4, of the first block 20 and the second block 21 of the carrier 3 previously divided, the inner race 52 of the first main bearing 5 is attached to the first inner race holding portion 26 of the base portion 22 of the first block 20 (inner race attachment step).

Subsequently, the case 2 is brought close to the first block 20 along the axial direction, and the base portion 22 of the first block 20 is disposed in the case 2. Along with this, the plurality of rollers 53 held in the case 2 are brought into contact with the inner ring raceway surface 52a of the inner race 52, and the seal portion 7 is sandwiched by the case-side seal portion 15 and the carrier-side seal portion 27 from both sides in the radial direction (second attachment process). As a result, the plurality of rollers 53 and the retainer 54 are disposed on the inner ring raceway surface 52a of the inner race 52, and the assembling of the first main bearing 5 is completed. Here, the case 2 and the first block 20 are configured such that the seal portion 7 attached to the case 2 and the inner race 52 attached to the base portion 22 of the first block 20 do not interfere with each other when the case 2 and the first block 20 are relatively moved to bring close to each other.

Similarly, the second block 21 of the carrier 3 is inserted into the case 2 along the axial direction to complete the assembling of the second main bearing 6. Then, the second block 21 is fixed to the plurality of support columns 23 of the first block 20, and the assembling of the gear device 1 is completed.

### <Comparative Example of Gear Device>

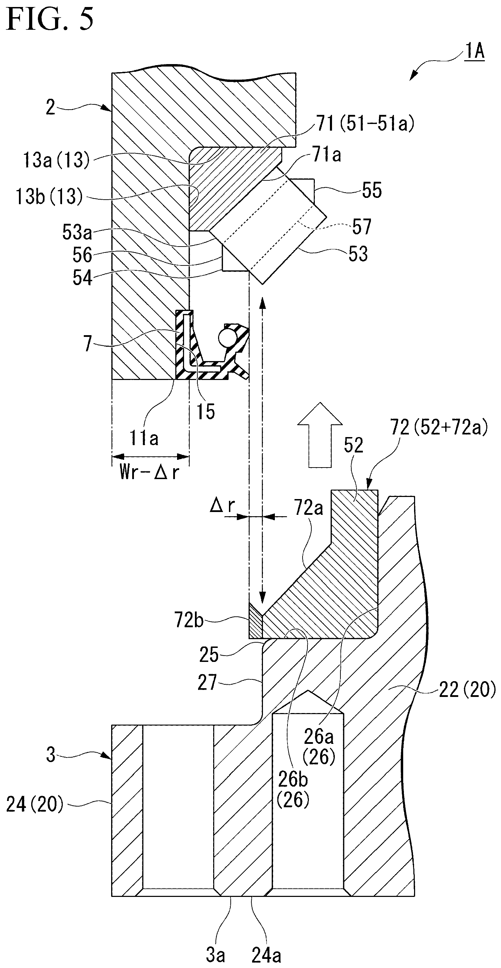

In order to explain the operation and effects of the main bearings 5 and 6 described above, a gear device 1A of a comparative example will be now described with reference to Fig. 5. Fig. 5 illustrates a part of a manufacturing method of the gear device 1A of the comparative example of the invention. The difference between the gear device 1 of the above embodiment and the gear device 1A of the comparative example is the shapes of the outer races 51, 61 and the inner races 52, 62 of the first main bearing 5 and the second main bearing 6, respectively, the position of the seal portion 7 with respect to the case 2, and the size of the seal portion 7.

For example, as shown in Fig. 5, the gear device 1A of the comparative example includes an outer race 71 and an inner race 72 instead of the outer race 51 and the inner race 52 of the above-described embodiment. The outer shape of the outer race 71 of the comparative example corresponds to the shape obtained by omitting the flange portion 51b from the outer race 51 of the embodiment. The outer shape of the inner race 72 of the comparative example corresponds to the shape obtained by adding the flange portion 72b to the inner race 52 of the embodiment. The flange portion 72b of the comparative example projects radially outward and axially inward from the large-diameter side end of an inner ring raceway surface 72a of the inner race 72.

The inner race 72 of the comparative example protrudes outward in the radial direction by a predetermined radial length Δr which is created by the flange portion 72b, as compared with the inner race 52 of the embodiment. Accordingly, the carrier-side seal portion 27 is radially displaced by a predetermined radial length Δr toward the outside. Further, for example, when the seal portion 7 and the inner race 72 are configured such that they do not interfere with each other as in the second attachment step of the manufacturing method described above, the seal portion 7 is disposed at a position shifted outward by a predetermined radial length Δr compared with the embodiment.

That is, if the radial thickness (width) of the seal portion 7 is unchanged, the inner diameter and outer diameter of the seal portion 7 increase by the predetermined radial length Δr. In this case, for example, if the position of the outer peripheral end of the case 2 is unchanged as compared with the embodiment, the radial thickness of the case 2 in the case-side sealing portion 15 becomes smaller than that of the embodiment. Consequently, the rigidity (mechanical strength) of the case 2 is reduced. Further, if the radial thickness of the case 2 is unchanged as compared with the embodiment, for example, the position of the outer peripheral end of the case 2 is situated outer in the radial direction than that of the embodiment, and the size of the case 2 is increased.

For example, the case 2 in the case-side seal portion 15 of the embodiment has a predetermined thickness Wr (see Fig. 4) in the radial direction of the case 2 whereas the radial thickness of the case 2 in the case-side seal portion 15 of the comparative example is smaller than the predetermined thickness Wr by a predetermined radial length Δr, and the rigidity of the case 2 is reduced.

As described above, the gear device 1 of the embodiment includes the flange portions 51b, 61b protruding inward in the radial direction at the large-diameter side ends of the outer ring raceway surfaces 51a, 61a of the outer races 51, 61, respectively. Thus, the gear device 1 can be easily assembled. The flange portions 51b, 61b of the outer races 51, 61 restrict the positions of the rollers 53, 63 on the outer ring raceway surfaces 51a, 61a by supporting the plurality of rollers 53, 63. Therefore, when the inner races 52 and 62 are attached to the plurality of rollers 53 and 63 supported by the outer races 51 and 61 respectively, it is possible to prevent the rollers 53 and 63 from being displaced.

For example, the outer diameter of the inner races 52 and 62 of the embodiment can be reduced as compared with the comparative example where the flange portion 72b is provided on the inner ring raceway surface 72a of the inner race 72. Thus, it is possible to prevent the carrier-side seal portion 27 of the carrier 3 from being disposed outward in the radial direction, that is, to prevent the increase of the outer diameter of the outer peripheral surface 25 of the base portion 22 of the first block 20.

Further, even when the seal portion 7 and the inner race 52 are configured not to interfere with each other, the inner diameter and the outer diameter of the seal portion 7 can be reduced compared with the case where the flange portion 72b is provided as in the inner race 72 of the comparative example. Thus, it is possible to prevent the decrease in the radial thickness of the case 2 in the case-side seal portion 15 and the decrease in the rigidity of the case 2. Moreover, it is possible to prevent the case 2 from being enlarged due to the outer peripheral end of the case 2 that is disposed outward in the radial direction. While obtaining these advantageous effects, it is possible to reliably prevent the seal portion 7 from coming into contact with the inner race 52 and damaging the seal portion 7 at the time of assembling the gear device 1.

Further, the rollers 53 are arranged at equal intervals in the circumferential direction so that the central axes R1 extend along the radial direction when viewed from the axial direction. Each roller 53 orbits around the axis of the axis O while rolling on the outer ring raceway surface 51a of the outer race 51 and on the inner ring raceway surface 52a of the inner race 52. It is necessary to make the moving distance of the radial outer end longer than the moving distance of the radial inner end while the roller 53 rolls one turn. This is because if the rollers 53 were not configured in this way, the rollers 53 may slip and the drive efficiency of the main bearings 5 and 6 may decrease, and the product life of the rollers 53 may decrease.

Here, each of the first main bearing 5 and the second main bearing 6 is the tapered roller bearing, and the rollers 53 and 63 are tapered rollers having a truncated cone outer shape. The rollers 53, 63 are arranged such that, of the ends in the central axes R1, R2 direction, their large diameter (lower bottom) side ends 53a face outward in the radial direction. Therefore, the peripheral length of the radial outer end of each roller 53 can be made longer than the peripheral length of the radial inner end. Consequently, it is possible to make the moving distance of the radial outer end longer than the moving distance of the radial inner end of the roller 53 which it rolls one turn. Therefore, it is possible to prevent the driving efficiency of the main bearings 5 and 6 from being lowered, and it is possible to extend the product life. Further, by configuring the rollers 53, 63 as the tapered rollers having a truncated cone outer shape, the load capacity of the main bearings 5, 6 can be increased.

The speed reducing mechanism 4 is arranged, for example, coaxially with the axis O. The speed reducing mechanism 4 includes a drive shaft 70 connected to a drive source (not shown), two or more transmission gears 41 meshing with a drive gear 70a of the drive shaft 70, two or more crank shafts 42 connected to the two or more transmission gears 41, and the first oscillating gear 43 and second oscillating gear 44. Therefore, it is possible to provide the gear device 1 having a large torque capacity while being small in size.

Further, the method for assembling the gear device 1 described above includes the outer race attachment step, the inner race attachment step, the first attachment step, and the second attachment step. In the process of the assembling method, the positions of the plurality of rollers 53, 63 are restricted by the flange portions 51b, 61b of the outer races 51, 61, and then the plurality of rollers 53, 63 are mounted by attaching the inner races 52, 62. Thus, it is possible to prevent the misalignment of the rollers 53, 63. Further, it is possible to prevent the occurrence of problems such as biting of the rollers 53, 63 by the outer races 51, 61 and the inner races 52, 62. Moreover, the seal portion 7 and the inner race 52 are configured such that they do not interfere with each other when the inner race 52 is attached to the plurality of rollers 53, which prevents damage to the seal portion 7.

### Modification Example

A modification example of the embodiment will be now described below. For purposes of clarity and brevity, like elements and components are labeled with same or similar designations and numbering as discussed in the above embodiment and the description thereof will not be repeated.

In the above embodiment, each of the first main bearing 5 and the second main bearing 6 is the tapered roller bearing, and the rollers 53, 63 are the tapered rollers having a truncated cone outer shape. However, the disclosure is not limited to this embodiment. For example, the rollers 53, 63 in the first main bearing 5 and the second main bearing 6 may be cylindrical rollers having a cylindrical shape. With this configuration, it is possible to easily form the rollers 53, 56 compared with the case where the rollers having a truncated cone outer shape. Further, since the rollers 53, 56 are cylindrical, it is easy to restrict the movement in the central axis R1, R2 directions, respectively. Consequently, the reliability of the main bearings 5, 6 can be enhanced.

In the above-described embodiment, in the speed reducing mechanism 4, the first oscillating gear 43 and the second oscillating gear 44 are oscillatory rotated by the crank shafts 42 that rotate about the corresponding central axis P radially displaced from the axis O. However, the speed reducing mechanism 4 is not limited to this configuration. For example, the speed reducing mechanism 4 may have an input shaft 80 (see the dashed-two dotted line in Fig. 1) having two or more eccentric portions 42b with the same central axis as the axis O instead of the drive shaft 70, the drive gear 70a, the transmission gear 41, and the plurality of crank shafts 42 of the above-described embodiment. Further, instead of the first oscillating gear 43 and the second oscillating gear 44 of the embodiment, two or more oscillating gears (for example, first oscillating gear 43 and the second oscillating gear 44) that oscillatory rotate in conjunction with the rotation of the two or more eccentric portions 42b. Even in this case, the same effect as that of the above-described embodiment is obtained. In addition, the configuration of the speed reducing mechanism 4 can be simplified.

The embodiment described herein represent a number of possible examples.

### LIST OF REFERENCE NUMBERS

1 ... gear device, 2 ... case, 3 ... carrier (shaft), 4 ... speed reducing mechanism, 5 ... first main bearing (bearing), 6 ... second main bearing (bearing), 7 ... seal portion, 51, 61 ... outer race, 42 ... crank shaft (input shaft), 42b ... eccentric portion, 43 ... first oscillating gear (oscillating gear), 44 ... second oscillating gear (oscillating gear), 51a, 61a ... outer ring raceway surface (inner peripheral surface), 51b, 61b ... flange portion, 52, 62 ... inner race, 53, 63 ... roller (rolling element), 53a ... large diameter, 54, 64 ... retainer, 80 ... input shaft, P ... central axis (eccentric axis), R1, R2 ... central axis (axis of rolling element)

## Claims

1. A gear device (1) comprising:
a case (2);
a shaft (3) and an input shaft (42) disposed in the case (2);
a gear mechanism (43, 44) transmitting rotation of the input shaft (42) to the case (2) or the shaft (3); and
a bearing (5, 6) disposed between the case (2) and the shaft (3), the bearing (5, 6) supporting the shaft (3) rotatably relative to the case (2), and
a seal portion (7) sealing between the case (2) and the shaft (3) therein;
wherein
the bearing (5, 6) includes:
an inner race (52, 62) provided on the shaft (3);
an outer race (51, 61) provided on the case (2);
a plurality of rolling elements (53, 63) arranged between the inner race (52, 62) and the outer race (51, 61), each of the rolling elements (53, 63) rotating about a central axis (R1, R2) as a roller axis which is inclined with respect to the central axis (O) of the shaft (3); and
a retainer (54, 64) retaining the plurality of rolling elements (53, 63),
wherein the outer race (51, 61) has a flange portion (51b, 61b) that prevents the plurality of rolling elements (53, 63) from moving in a direction of the central axis (R1, R2),
wherein the flange portion (51b, 61b) projects radially inward from an inner peripheral surface of the outer race (51, 61) and is disposed at a large-diameter end of the inner peripheral surface situated on the larger diameter side of the inner peripheral surface,
wherein the seal portion (7) is disposed on an outer side of the bearing (5, 6) in the direction of the central axis (O) of the shaft (3),
wherein an inner diameter of a case-side seal portion (15) of the case (2) holding the seal portion (7) is the same as an inner diameter of a peripheral surface (13b) of an outer race holding portion (13) of the case (2) holding the outer race (51, 61).

2. The gear device (1) of claim 1, wherein each of the plurality of rolling elements (53, 63) is a tapered roller that extends along the central axis (R1, R2) and has a truncated cone outer shape,
wherein each of the plurality of rolling elements (53, 63) is arranged such that its larger diameter end faces radially outward.

3. The gear device (1) of claim 1, wherein each of the plurality of rolling elements (53, 63) is a cylindrical roller that extends along the central axis (R1, R2) and has a cylindrical outer shape.

4. The gear device (1) of any one of claims 1 to 3, wherein the input shaft (42) includes two or more crank shafts each of which has an eccentric axis (P) radially displaced from the central axis (O) of the shaft (3),
wherein each of the two or more crank shafts has an eccentric portion (42b) eccentric with respect to the eccentric axis (P),
wherein the gear mechanism (43, 44) is an oscillating gear that is supported by the shaft (3) and oscillatory rotates in conjunction with rotation of each of the eccentric portions (42b).

5. The gear device (1) of any one of claims 1 to 3, wherein the input shaft (42) is disposed coaxially with the central axis (O) of the shaft (3),
wherein the input shaft (42) has an eccentric portion (42b) eccentric with respect to the central axis (O) of the shaft (3),
wherein the gear mechanism (43, 44) is an oscillating gear that is supported by the shaft (3) and oscillatory rotates in conjunction with rotation of the eccentric portion (42b).

## Patentansprüche

1. Eine Getriebevorrichtung (1), umfassend:
ein Gehäuse (2);
eine Welle (3) und eine Eingangswelle (42), die in dem Gehäuse (2) angeordnet sind;
einen Zahnradmechanismus (43, 44), der Drehung der Eingangswelle (42) auf das Gehäuse (2) oder die Welle (3) überträgt; und
ein Lager (5, 6), das zwischen dem Gehäuse (2) und der Welle (3) angeordnet ist, wobei das Lager (5, 6) die Welle (3) relativ zu dem Gehäuse (2) drehbar lagert, und
einen Dichtungsabschnitt (7), der zwischen dem Gehäuse (2) und der darin befindlichen Welle (3) abdichtet, wobei
das Lager (5, 6) einschließt:
einen Innenring (52, 62), der sich an der Welle (3) befindet;
einen Außenring (51, 61), der sich an dem Gehäuse (2) befindet;
eine Vielzahl von Wälzkörpern (53, 63), die zwischen dem Innenring (52, 62) und dem Außenring (51, 61) angeordnet sind, wobei sich jeder der Wälzkörper (53, 63) um eine Mittelachse (R1, R2) als einer Rollenachse herum dreht, die in Bezug auf die Mittelachse (O) der Welle (3) geneigt ist; und
einen Käfig (54, 64), der die Vielzahl von Wälzkörpern (53, 63) hält,
wobei der Außenring (51, 61) einen Flanschabschnitt (51b, 61b) aufweist, der verhindert, dass
die Vielzahl von Wälzkörpern (53, 63) sich in einer Richtung der Mittelachse (R1, R2) bewegen,
der Flanschabschnitt (51b, 61b) von einer Innenumfangsfläche des Außenrings (51, 61) radial nach innen vorsteht und an einem Ende mit großem Durchmesser der Innenumfangsfläche angeordnet ist, das sich an der Seite des größeren Durchmessers der Innenumfangsfläche befindet,
wobei der Dichtungsabschnitt (7) an einer Außenseite des Lagers (5, 6) in der Richtung der Mittelachse (O) der Welle (3) angeordnet ist,
wobei ein Innendurchmesser eines gehäuseseitigen Dichtabschnitts (15) des Gehäuses (2), der den Dichtabschnitt (7) hält, derselbe ist wie ein Innendurchmesser einer Umfangsfläche (13b) eines Außenringhalteabschnitts (13) des Gehäuses (2), der den Außenring (51, 61) hält.

2. Die Getriebevorrichtung (1) nach Anspruch 1, wobei jeder der Vielzahl von Wälzkörpern (53, 63) eine Kegelrolle ist, die sich entlang der Mittelachse (R1, R2) erstreckt und eine Kegelstumpf-Außenform hat,
und jeder der Vielzahl von Wälzkörpern (53, 63) so angeordnet ist, dass sein Ende mit dem größeren Durchmesser radial nach außen gewandt ist.

3. Die Getriebevorrichtung (1) nach Anspruch 1, wobei jeder der Vielzahl von Wälzkörpern (53, 63) eine Zylinderrolle ist, die sich entlang der Mittelachse (R1, R2) erstreckt und eine Zylinder-Außenform hat.

4. Die Getriebevorrichtung (1) nach einem der Ansprüche 1 bis 3, wobei die Eingangswelle (42) zwei oder mehr Kurbelwellen einschließt, von denen jede eine gegenüber der Mittelachse (O) der Welle (3) radial versetzte exzentrische Achse (P) haben,
wobei jede der zwei oder mehr Kurbelwellen einen exzentrischen Abschnitt (42b) aufweist, der in Bezug auf die exzentrische Achse (P) exzentrisch ist,
und der Zahnradmechanismus (43, 44) ein oszillierendes Zahnrad ist, das von der Welle (3) getragen wird und sich in Verbindung mit Drehung jedes der exzentrischen Abschnitte (42b) oszillierend dreht.

5. Die Getriebevorrichtung (1) nach einem der Ansprüche 1 bis 3, wobei die Eingangswelle (42) koaxial mit der Mittelachse (O) der Welle (3) angeordnet ist,
die Eingangswelle (42) einen exzentrischen Abschnitt (42b) aufweist, der in Bezug auf die Mittelachse (O) der Welle (3) exzentrisch ist,
und der Zahnradmechanismus (43, 44) ein oszillierendes Zahnrad ist, das von der Welle (3) getragen wird und sich in Verbindung mit Drehung des exzentrischen Abschnitts (42b) oszillierend dreht.

## Revendications

1. Dispositif d'engrenage (1) comprenant:
un boîtier (2) ;
un arbre (3) et un arbre d'entrée (42) disposés dans le boîtier (2);
un mécanisme d'engrenage (43, 44) transmettant la rotation de l'arbre d'entrée (42) au boîtier (2) ou à l'arbre (3); et
un roulement (5, 6) disposé entre le boîtier (2) et l'arbre (3), le roulement (5, 6) supportant l'arbre (3) en rotation par rapport au boîtier (2), et
une partie étanchéité (7) assurant l'étanchéité entre le boîtier (2) et l'arbre (3) à l'intérieur de celui-ci;
dans lequel
le roulement (5, 6) comprend:
un chemin de roulement intérieur (52, 62) prévu sur l'arbre (3);
un chemin de roulement extérieur (51, 61) prévu sur le boîtier (2);
une pluralité d'éléments roulants (53, 63) agencés entre le chemin de roulement intérieur (52, 62) et le chemin de roulement extérieur (51, 61), chacun des éléments roulants (53, 63) tournant autour d'un axe central (R1, R2) comme axe de rouleau qui est incliné par rapport à l'axe central (O) de l'arbre (3); et
un élément de retenue (54, 64) retenant la pluralité d'éléments roulants (53, 63),
dans lequel le chemin de roulement extérieur (51, 61) possède une partie bride (51b, 61b) qui empêche la pluralité d'éléments roulants (53, 63) de se déplacer dans une direction de l'axe central (R1, R2),
dans lequel la partie bride (51b, 61b) fait saillie radialement vers l'intérieur à partir d'une surface périphérique interne du chemin de roulement extérieur (51, 61) et est disposée au niveau d'une extrémité de grand diamètre de la surface périphérique interne située sur le côté de plus grand diamètre de la surface périphérique interne,
dans lequel la partie étanchéité (7) est disposée sur un côté extérieur du roulement (5, 6) dans la direction de l'axe central (O) de l'arbre (3).

2. Dispositif d'engrenage (1) selon la revendication 1, dans lequel chacun de la pluralité d'éléments roulants (53, 63) est un rouleau conique qui s'étend le long de l'axe central (R1, R2) et a une forme extérieure tronconique,
dans lequel chacun de la pluralité d'éléments roulants (53, 63) est agencé de sorte que son extrémité de plus grand diamètre soit tournée radialement vers l'extérieur.

3. Dispositif d'engrenage (1) selon la revendication 1, dans lequel chacun de la pluralité d'éléments roulants (53, 63) est un rouleau cylindrique qui s'étend le long de l'axe central (R1, R2) et a une forme extérieure cylindrique.

4. Dispositif d'engrenage (1) selon l'une quelconque des revendications 1 à 3, dans lequel l'arbre d'entrée (42) comprend deux vilebrequins ou plus dont chacun présente un axe excentrique (P) déplacé radialement par rapport à l'axe central (O) de l'arbre (3),
dans lequel chacun des deux vilebrequins ou plus possède une partie excentrique (42b) qui est excentrique par rapport à l'axe excentrique (P),
dans lequel le mécanisme d'engrenage (43, 44) est un engrenage oscillant qui est supporté par l'arbre (3) et tourne de manière oscillante conjointement avec la rotation de chacune des parties excentriques (42b).

5. Dispositif d'engrenage (1) selon l'une quelconque des revendications 1 à 3, dans lequel l'arbre d'entrée (42) est disposé coaxialement à l'axe central (O) de l'arbre (3),
dans lequel l'arbre d'entrée (42) possède une partie excentrique (42b) qui est excentrique par rapport à l'axe central (O) de l'arbre (3),
dans lequel le mécanisme d'engrenage (43, 44) est un engrenage oscillant qui est supporté par l'arbre (3) et tourne de manière oscillante conjointement avec la rotation de la partie excentrique (42b).
